(19) Europäisches Patentamt
European Patent Office
Office européen des brevets

(11) EP 0 385 654 B1

(12) EUROPEAN PATENT SPECIFICATION

(45) Date of publication and mention
of the grant of the patent:
**16.04.1997 Bulletin 1997/16**

(51) Int Cl.[6]: **H04N 7/30**, H04N 5/92

(21) Application number: **90301878.6**

(22) Date of filing: **21.02.1990**

(54) **Highly efficient coding apparatus**

Kodiergerät von hoher Wirksamkeit

Dispositif de codage à haute efficacité

(84) Designated Contracting States:
**DE FR GB**

(30) Priority: **28.02.1989 JP 46971/89**

(43) Date of publication of application:
**05.09.1990 Bulletin 1990/36**

(73) Proprietor: **SONY CORPORATION**
**Tokyo (JP)**

(72) Inventor: **Shirota, Norihisa, c/o Sony Corporation**
**Tokyo (JP)**

(74) Representative: **Ayers, Martyn Lewis Stanley et al**
**J.A. KEMP & CO.**
**14 South Square**
**Gray's Inn**
**London WC1R 5LX (GB)**

(56) References cited:
**EP-A- 0 267 579**

• **IEEE TRANSACTIONS ON COMMUNICATIONS, vol. COM-29, no. 12, December 1981, pages 1740-1753, New York, US; F.A. KAMANGAR et al.: "Interfield hybrid coding of component color television signals"**
• **IDEM**
• **FREQUENZ, vol. 40, no. 8, August 1986, pages 190-197, Berlin, DE; A. V. BRANDT: "Teilbandcodierung von Bewegtbild-Sequenzen mit 2 Mbit/s"**
• **2ND INTERNATIONAL TECHNICAL SYMPOSIUM ON OPTICAL AND ELECTROOPTICAL APPLIED SCIENCE AND ENGINEERING. IMAGE PROCESSING SYMPOSIUM, Cannes, 2nd - 6th December 1985, pages 250-259; H. HÖLZLWIMMER et al.: "A new hybrid coding technique for videoconference application at 2 Mbit/s"**
• **INTERNATIONAL CONFERENCE ON ACOUSTICS, SPEECH, AND SIGNAL PROCESSING, Glasgow, 23rd - 26th May 1989, vol. 3, pages 1842-1845; A. BASKURT et al.: "Encoding the location of spectral coefficients using quadtrees in transform image compression"**
• **IEEE TRANSACTIONS ON COMMUNICATIONS, vol. COM-25, no. 11, November 1977, pages 1285-1292, IEEE, New York, US; W.-H. CHEN et al.: "Adaptive coding of monochrome and color images"**

**Description**

This invention relates to a highly efficient coding apparatus for compressing the data amount through encoding a digital picture signal with discrete transform encoding such as discrete cosine transform and, more particularly, to buffering for controlling the data amount of transmission data at a value less than a predetermined value.

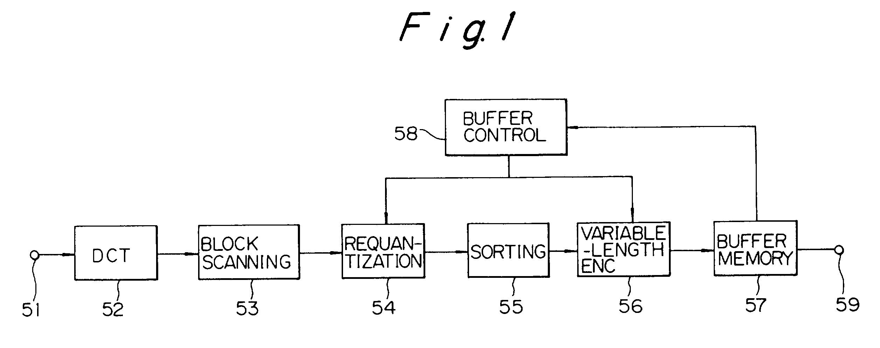

It is known that in order to suppress the redundancy of a picture signal, a picture is divided into blocks, each of which has a predetermined number of picture elements and that transform encoding is performed on a transform axis matching the characteristic of an original picture signal for every block. For the transform encoding, Hadamard transform, cosine transform, Fourier transform, etc., are known. A conventional cosine transform encoding apparatus has a structure as shown in Fig. 1, for example.

In Fig. 1, a sampled discrete picture signal f(j, k) is given to an input terminal indicated by 51, and this input signal is supplied to a cosine transform (DCT transform) circuit 52. At the cosine transform circuit 52, discrete cosine transform is made. In the discrete transform, the signal processing indicated by the following equation is done. Here, original data is supposed to be two-dimensional data f(j, k) (j, k = 0, 1, ..., n - 1) of (n × n) samples/block.

$$F(u, v) = \frac{4C(u)C(v)}{n^2} \sum_{j=0}^{n-1} \sum_{k=0}^{n-1} f(j, k)$$

$$\times \cos\left\{\frac{(2j + 1)u\pi}{2n}\right\} \cos\left\{\frac{(2k + 1)v\pi}{2n}\right\}$$

$$u, v = 0, 1, ..., n - 1$$

$$C(W) = \begin{cases} 1/\sqrt{2} & ; \quad w = 0 \\ 1 & ; \quad w = 1, 2, ..., n - 1 \end{cases}$$

A coefficient value F(u, v) from the cosine transform circuit 52 is supplied to a block scanning circuit 53, and coefficient data within a block is output from a direct current component to a high frequency component by zigzag scanning. The coefficient data from the block scanning circuit 53 is supplied to a requantization circiut 54. At the requantization circiut 54, the coefficient data is quantized with the quantization step from a buffer control circuit 58. The output signal of the requantization circuit 54 is supplied to a sorting circuit 55. In the sorting circuit 55, the coefficient data is sorted in the order of absolute values of amplitudes and both of the amplitudes and addresses are differentiated. A differential signal from the sorting circuit 55 is given to a variable-length encoding circuit 56. At the variable-length encoding circuit 56, the signal is converted into a code signal having a predetermined bit number by run-length coding and Huffman coding.

The code signal from the variable-length encoding circuit 56 is supplied to a buffer memory 57. The buffer memory 57 is provided to convert the transmission rate of the coding signal into a rate which does not exceed the rate of a transmission path. The data rate on the input side of the buffer memory 57 is variable, whereas that on the output side of the buffer memory 57 is almost constant. The output data of the buffer memory 57 is taken out at a terminal 59. Fluctuation of the transmission data amount is detected at the buffer memory 57, and its detection signal is supplied to a buffer control circuit 58.

The buffer control circuit 58 controls the quantization step of the requantization circuit 54, and controls so that coefficient data to be transmitted becomes a predetermined data amount by thresholding at the variable-length encoding circuit 56. The thresholding is a processing for subtracting a threshold value from coefficient data whose absolute value is larger than the threshold value. Here, coefficient data F (0, 0) of a direct current component is excluded from the object of the thresholding.

In the feedback type buffering as mentioned above, the feedback control of the quantization step and the threshold value is done by the buffer control circuit 58 so that when the buffer memory 57 is about to overflow, the rate of input data to the buffer memory 57 is lowered, whereas when the buffer memory 57 is about to underflow, the rate of the input data to the buffer memory 57 is increased. If the sensitivity to the feedback amount is elevated excessively for the feedback control, oscillation takes place in the vicinity of an object value. Conversely, when the sensitivity is lowered too much, there is a problem that it takes time for the convergence. There is a need to increase the capacity of the buffer memory 57 when a lot of time is needed for the convergence. In this way, there is a disadvantage that a considerable amount of know-how is required to put the conventional buffering process into practical use.

In addition, the conventional feedback type buffering device has a disadvantage that complicated circuits such as the sorting circuit 55 and the thresholding circuit are needed.

Further, there is a disadvantage in the conventional system that although the transmission data amount can be lowered on the average over a long period less than a predetermined value, it is difficult to control the data amount correctly at the unit of one field or one frame of a television signal such as a digital VTR.

EP-A-0,267,579 describes another coding apparatus, in which data is divided into blocks, passed through a cosine transform and then quantised by analysing the quantisation level necessary for coding each block of data and using this information to determine the most suitable overall quantisation level. The quantised data is then passed to a variable length coding circuit and then to a transmission buffer for transmission. In said coding apparatus the amount of information to be coded is estimated.

The present applicant has proposed a coding apparatus in which an ADRC (code adaptive to the dynamic range DR) encodes coefficient data previously obtained through transform encoding and suppresses the data amount of encoded output at a value equal to or less than a predetermined value (refer to the specification of Japanese Patent Application JP-A-2092162). This system can solve a disadvantage of the conventional feedback type buffering and increase the data compression rate. However, since there is a need to combine an ADRC encoding apparatus, the circuit becomes complicated and data errors increase.

Therefore, an object of the present invention is to provide a highly efficient coding apparatus which is free from the problems encountered in the prior art.

another object of the present invention is to provide a highly efficient coding apparatus for enabling the total amount of data during a predetermined period to be less than the capacity of the transmission means through which the data is transmitted.

A further object of the present invention is to provide a highly efficient coding apparatus capable of shortening the time for performing a buffering operation.

A still further object of the present invention is to provide a highly efficient coding apparatus for transmitting data with a predetermined data pattern suitable for performing a buffering operation.

According to an aspect of the invention there is provided a coding apparatus for coding digital video data in a block format allowing video data compression for transmission by data transmission means having a predetermined transmission capacity, comprising :

block segmentation means supplied with said digital video data and for generating block data,

orthogonal transformation means supplied with said block data and for generating coefficient data including a DC component and a plurality of AC components for each block,

means for generating a first distribution table of the AC coefficient data during a predetermined period,

means for generating a second distribution table of accumulating type from said first distribution table,

means for controlling the total number of transmission bits of said AC coefficient data during said predetermined period by said second distribution table and by said predetermined transmission capacity of said data transmission means,

wherein said controlling means also includes calculating means for calculating a value representative of the total number of transmission bits of said AC coefficient data during said predetermined period on the basis of said second distribution table, and comparator means for comparing said value with said predetermined transmission capacity of said data transmission means, and

wherein said controlling means further includes means for generating a mode control signal responsive to the output from the comparator means, and means for outputting controlled AC coefficient data according to said mode control signal, said coding apparatus further comprising

means for transmitting said DC coefficient data, said controlled AC coefficient data and an additional code for each said predetermined period, and characterised in that

said first and second distribution tables store the frequency of occurrence and cumulative frequency of occurrence respectively of each of the absolute values of said AC coefficient data,

said value representative of said total number of transmission bits is an exact calculation of said total number based on the total number of bits of the transmission data of each of the values of said AC coefficient data, and

said means for outputting controlled AC coefficient data comprises a multiplier for multiplying the AC coefficient data by a weighting coefficient.

The above, and other objects, features and advantages of the present invention will become readily apparent from the following detailed description thereof which is to be read in connection with the accompanying drawings.

Fig. 1 is a block diagram of a prior art;
Fig. 2 is a block diagram of one embodiment of this invention;

Fig. 3 is a schematic diagram for describing a block as a unit of process for encoding;
Fig. 4 is a schematic diagram for explaining an operation of a weighting circuit;
Figs. 5A to Fig. 5C are schematic diagrams for a sub-block construction;
Fig. 6 is a schematic diagram describing a transmission pattern of data;
Figs. 7A to Fig. 7B are schematic diagrams for explaining the rule of quantizing AC coefficient data;
Fig. 8 is a block diagram of a distribution table generator;
Fig. 9 is a block diagram of another example of controller for controlling the amount of data;
Figs. 10A and Fig. 10B are schematic diagrams for describing distribution tables;
Fig. 11 is a schematic diagram for describing another example of a distribution table of integrating type;
Fig. 12 is a schematic diagram for describing another transmission pattern of data;
Fig. 13 is a block diagram of another distribution table generator;
Fig. 14 is a block diagram of another embodiment of this invention;
Figs. 15A to Fig. 15H are schematic diagrams for describing block patterns;
Figs. 16A to Fig. 16D are schematic diagrams for describing transmission patterns of data;
Fig. 17 is a block diagram of distribution table generator; and
Fig. 18 is a flow chart for explaining operation of this invention.

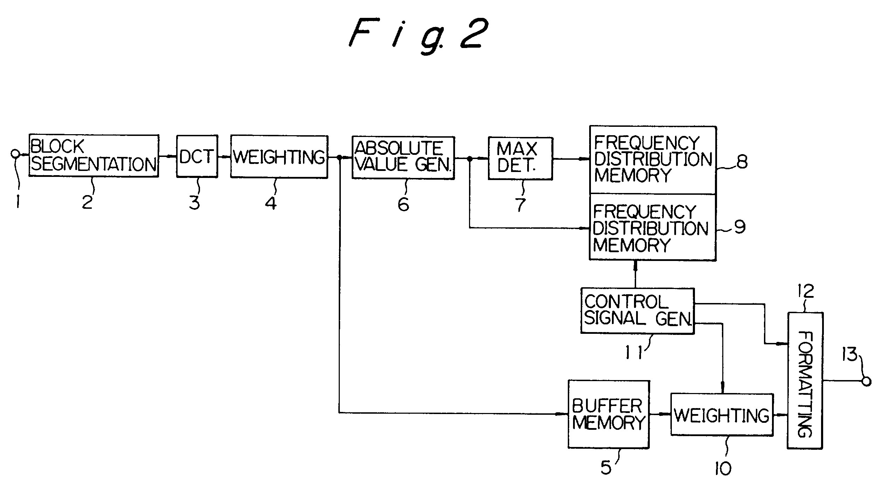

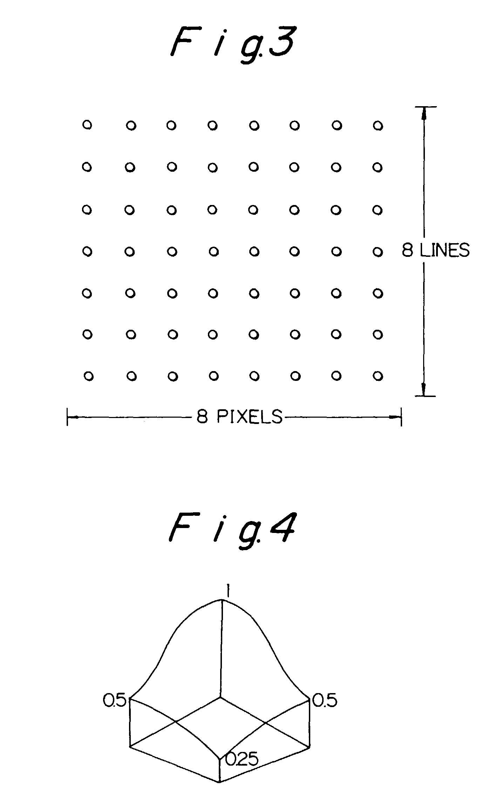

Hereunder, one embodiment of the invention will be described referring to the drawings. In Fig. 2, a sampled discrete picture signal is supplied to an input terminal indicated by 1, and the input digital picture signal is given to a block segmentation circuit 2. In the block segmentation circuit 2, a digital signal in a field is converted from the scanning order to the block order. Fig. 3 shows an example of a picture block for DTC, and a two-dimensional block of (8 × 8) of 8 picture elements in the horizontal direction and 8 lines in the vertical directions is formed. In the case where the number of effective lines in one field is 240 and the number of effective samples per line is 720 in a system in which the line number is 525,

$$(720 \times 240) \div (8 \times 8) = 2700$$

blocks are contained in one field.

The output signal of the block segmentation circuit 2 is supplied to a cosine transform (DCT transform) circuit 3. At the cosine transform circuit 3, discrete cosine transform is made by a processing similar to the conventional one. A coefficient table of (8 × 8) corresponding to the block size is obtained from the cosine transform circuit 3. In this coefficient table, each coefficient value data is eight-bit data containing a sign (±) bit of one bit, for example.

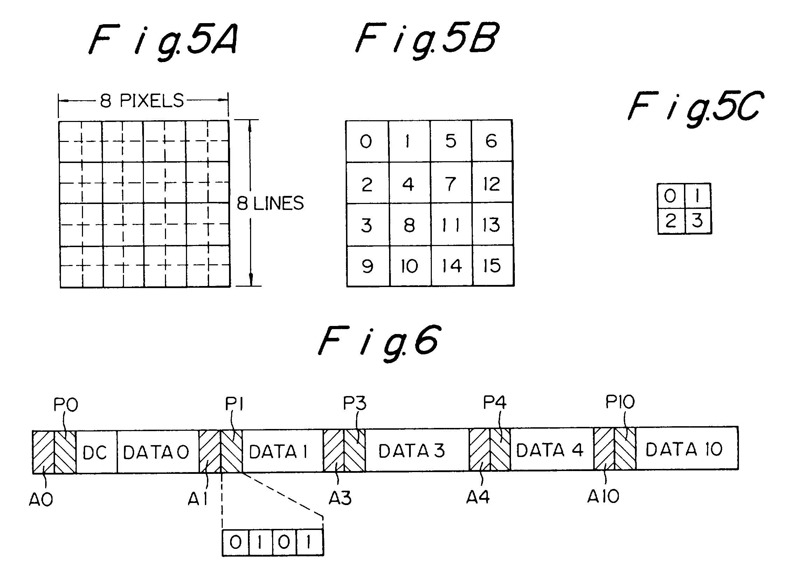

The coefficient data from the cosine transform circuit 3 is supplied to a weighting circuit 4. In the weighting circuit 4, fixed weighting coefficients as shown in Fig. 4 are multiplied for the coefficient table of (8 × 8).

The value of these weighting coefficients being 1 for DC (direct current) components, and respectively less for higher order components. In other words, the greater the importance of the coefficients, the larger the weighting coefficient that they are to be multiplied by.

Coefficient data from the weighting circuit 4 is supplied to a buffer memory 5 composed of one field memory and an absolute value generating circuit 6. The coefficient data converted into an absolute value at the absolute value generating circuit 6 is supplied to a maximum value detector 7 and a frequency distribution memory 9. The output signal of the maximum value detector 7 is given to a frequency distribution memory 8. The maximum value detector 7 detects a maximum value MAX of absolute values of AC coefficients for every sub-block further divided from a block for DCT. The above-mentioned block of (8 × 8) is further divided into 16 sub-blocks of (2 × 2) as shown in Fig. 5A. With respect to the sub-blocks, 0 to 15 are numbered in the order of zigzag scanning as shown in Fig. 5B. An address of the sub-block is represented by four bits corresponding to each number. A sample number in the sub-block is determined as shown in Fig. 5C.

The frequency distribution memories 8 and 9 are provided for the buffering process which is described later. In one frequency distribution memory 8, the frequency distribution of the maximum value MAX in a sub-block of AC coefficients which are converted into absolute values is stored, and the maximum value MAX is then accumulated in a period of one field to form an accumulated frequency distribution table. In the other frequency distribution memory 9, the frequency distribution of the AC coefficients converted into the absolute values is stored, and this value is then accumulated in a period of one field to form an accumulated frequency distribution.

The buffer memory 5 has a memory capacity of one field which is the unit of the buffering process, and coefficient data from the buffer memory 5 is supplied to a weighting circuit 10. The weighting circuit 10 is provided for the buffering process, and a controlled-weighting coefficient is multiplied by the coefficient data so that the transmission data amount (transmission bit number) per field does not exceed a predetermined value for an object. The maximum value of the weighting coefficients is 1, and as they become small like 1/2, 1/4, 1/8, 1/16, 1/32, 1/64, the data amount to be transmitted decreases. The object to be subjected to the buffering process is AC components, and the DC component of high importance is transmitted in the form of original data.

Addresses for the frequency distribution memories 8 and 9, a mode signal for designating a weighting coefficient for the weighting circuit 10, etc., are developed at a control signal generating circuit 11. Coefficient data and the mode signal from the weighting circuit 10 are supplied to a format development circuit 12, and transmission data is generated from an output terminal 13 of the format development circuit 12 to be sent to a transmission path. An example of the transmission path is a process for magnetic recording/reproduction. In the format development circuit 12, the addition of a synchronization pattern for transmission, processing for error correction encoding, etc., are made when necessary. The processing such as the calculation of the transmission bit number can be done in a data dropping period of input data (vertical blanking period), and the weighting process is made for data read out of the buffer memory 5 in the next field period depending on the mode determined in the preceding field.

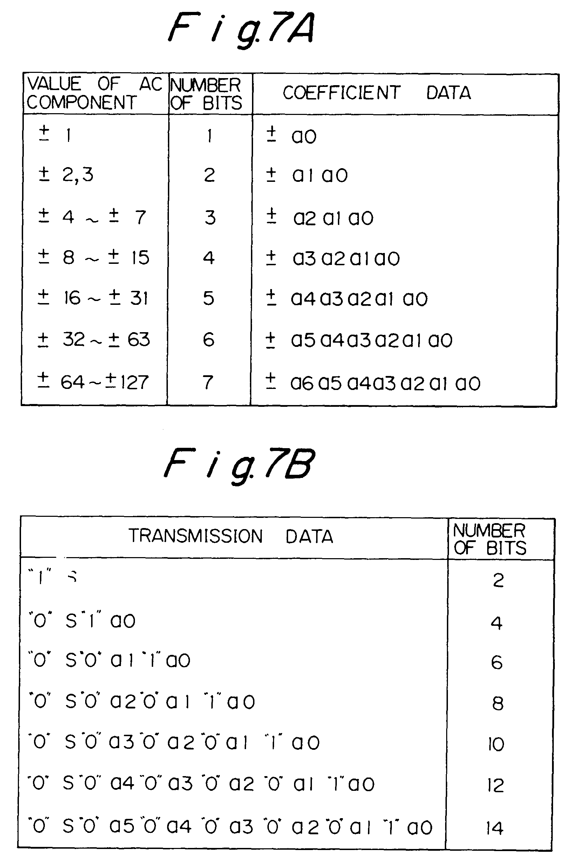

Fig. 6 shows a structure of transmission data. The transmission data has a structure in which data of a sub-block 0 is positioned first and data of sub-blocks whose data is not zero is positioned subsequently. In Fig. 6, DC is data of the zero-th sample of the sub-block 0, i.e., data indicative of a direct current component, and this data DC is always transmitted with eight bits. Ai is four-bit address data indicating that data of the i-th sub-block is followed. Pi is four-bit data indicating the number of samples to be sent in the i-th sub-block. In the Pi; "1" is a sample having a value which is not 0, that is, a significant sample, and its value is encoded in a portion of data DATAi. In the Pi, "0" is a sample having a value 0 which is not transmitted. For example, when P1 is (0101) as shown in the drawing, it means that the values of the zero-th and the second samples of the sub-block 1 are 0, that the values of the first and the third samples are not 0, and that these non-zero values are encoded in the portion of the DATAi.

The coefficient data provided by the cosine transform is represented by 8 bits containing the sign (±) bit. This coefficient data is converted into a transmission signal at the format development circuit 12 as shown in Fig. 7. Fig. 7A indicates AC coefficient values and codes of the coefficient data provided by DCT. Here, ai represents the (i - 1)-th bits of the AC coefficient data. This coefficient data is converted into transmission data of a bit pattern indicated in Fig. 7B.

The bit pattern of the transmission data is composed of the insertion of a combined bit of "0" or "1" between original bits having a sign bit S at the head. "0" of the sign bit S means +, whereas its "1" means -. "1" of the combined bit is added prior to the last bit. As a result, the last of a bit sequence becomes ("1"S) or ("1"a0) so as to enable the separation of the bit sequence and to decode transmission data into coefficient data on the reception side.

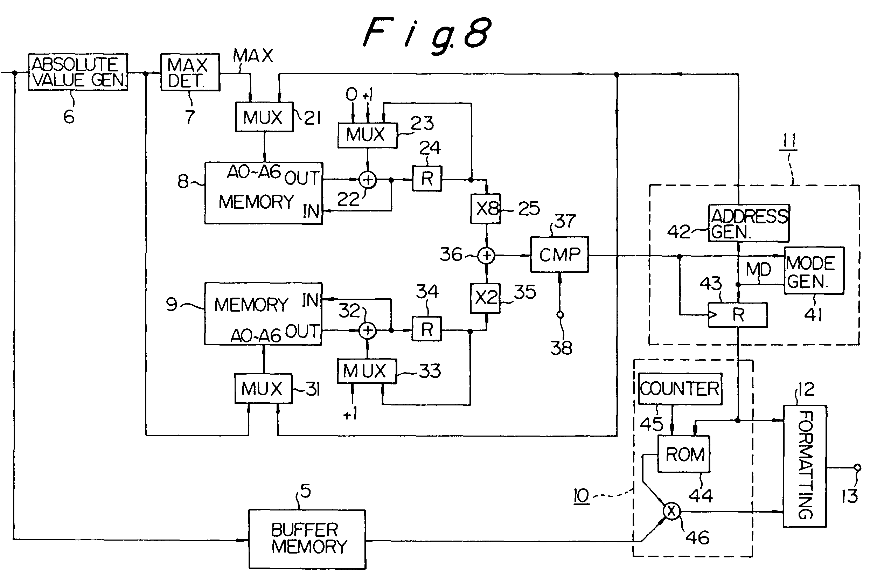

Fig. 8 shows a detailed part of the related portion with the buffering process of one embodiment of the invention. An absolute value of an AC coefficient from the absolute value generating circuit 6 is supplied to the maximum value detector 7, and a maximum value MAX for each sub-block is detected at the maximum value detector 7. The maximum valued is given to a multiplexer 21, and the output signal of the multiplexer 21 is supplied as a seven-bit address for the frequency distribution memory 8. Also, the absolute value of the AC coefficient is supplied to a multiplexer 31, and the output signal of the multiplexer 31 is given as a seven-bit address for the frequency distribution memory 9.

Data read out from the frequency distribution memory 8 is supplied to an adder 22 and added to the output of a multiplexer 23 at the adder 22. Here, 0, +1 and the output signal of a register 24 are supplied to the multiplexer 23, and one of these input signals is selectively given to the adder 22. The output signal of the adder 22 is supplied to a register 24. As has been mentioned above, the output signal of the register 24 is feedback to the multiplexer 23 and multiplied by 8 through a multiplier 25. The output signal of the multiplier 25 is given to an adder 36.

In association with the frequency distribution memory 9, an adder 32, a multiplexer 33, a register 34 and a multiplexer (twofold circuit) 35 are provided like the memory 8. The multipliers 25 and 35 can be composed of a shift circuit.

As described later, the number of transmission bits of AC coefficients necessary for transmission is obtained at the output of an adder 36, and the number of transmission bits is supplied to a comparator 37. An object value of the number of transmission bits is given to the comparator 37 from a terminal 38, and detection is made on whether the calculated transmission bit number is larger or smaller than the object value.

The comparison output signal of the comparator 37 is given to a mode generator 41 of the control signal generating circuit 11 indicated by a block of a broken line. The mode generator 41 generates a three-bit mode control signal MD, for example. The mode control signal MD is supplied to an address generator 42 and a register 43. To the register 43, the comparison output signal from the comparator 37 is given as a clock. When the transmission bit number is smaller than the object value, the mode control signal MD is taken into the register 43 by the comparison output signal generated from the comparator 37. In addition, an address signal developed at the address generator 42 is supplied to the multiplexers 21 and 31.

Modes controlled by the mode control signal MD are as follows:

mode 1:    AC coefficient is transmitted as it is.
mode 2:    AC coefficient multiplied by 1/2 is transmitted.
mode 3:    AC coefficient multiplied by 1/4 is transmitted.
mode 4:    AC coefficient multiplied by 1/8 is transmitted.

mode 5: AC coefficient multiplied by 1/16 is transmitted.
mode 6: AC coefficient multiplied by 1/32 is transmitted.
mode 7: AC coefficient multiplied by 1/64 is transmitted.

The mode control signal MD from the register 43 is supplied to the weighting circuit 10 indicated by a block of a broken line. The weighting circuit 10 is constituted by a ROM 44 and a multiplier 46. The ROM 44 is supplied, as an address, with the mode control signal MD from the register 43 and a sub-block number generated at a counter 45, and generates a weighting coefficient. At the multiplier 46 coefficient data from the buffer memory 5 and the weighting coefficient read out of the ROM 44 are multiplied. The output data of the multiplier 46 is given to the format development circuit 12 and converted into transmission data together with the mode control signal MD.

The supply of the sub-block number from the counter 45 to the weighting circuit 10 is to make it possible to perform the multiplication of a finer weighting coefficient rather than a constant weighting coefficient such as 1/2 by the AC coefficient. For example, it is possible to multiply different weighting coefficients by the sub-blocks 0 to 5 and the sub-blocks 6 to 15. In this case, however, when such weighting is carried out, a pair of the frequency distribution memories 8 and 9 are needed separately for the sub-blocks 0 to 5 and for the sub-blocks 6 to 15.

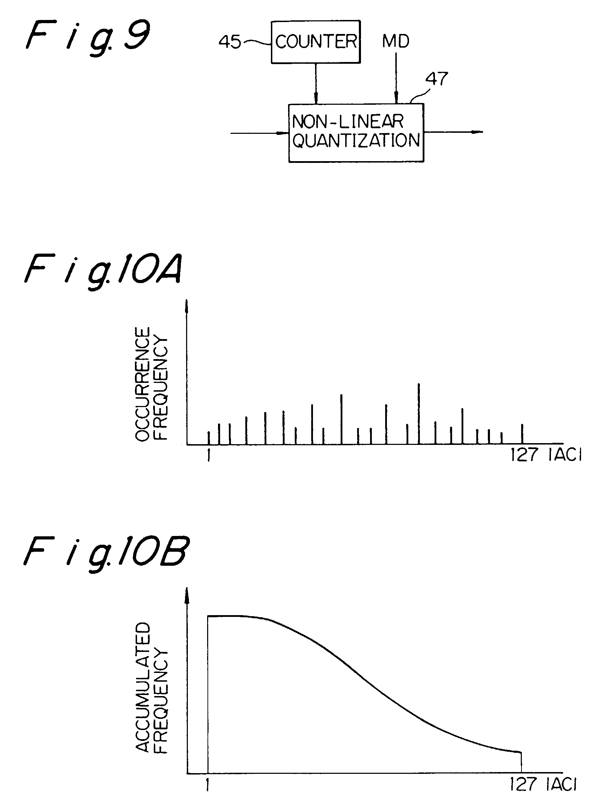

A non-linear quantization circuit 47 as shown in Fig. 9 may be used instead of the weighting circuit 10. The non-linear quantization circuit 47 is composed of a ROM, for example. The sub-block number from the counter 45 and a mode control signal MD are supplied to the non-linear quantization circuit 47 so that an output signal which is requantized with a quantization step depending on the mode can be provided therefrom. For instance, when it is desired to decrease the transmission bit number, data requantized with a large quantization step is formed.

To control the transmission bit number per field at a value smaller than an object value, the transmission bit number is calculated in the mode 1 (i,e., when the weighting coefficient is 1), the transmission bit number and the object value are compared in the comparator 37, and when the transmission bit number is smaller than the object value, AC coefficient weighted in the mode 1 are transmitted. Conversely, when the transmission bit number is larger than the object value, the transmission bit number is calculated in the mode 2 (i,e., when the weighting coefficient is 1/2), and the transmission bit number is compared with the object value. Until the transmission bit number becomes smaller than the object value, the modes are switched from the mode 1 to the mode 7 sequentially.

With respect to the calculation of the transmission bit number, explanation will be given taking an example of 2700 blocks/field.

First, A0, P0, DC in transmission data (refer to Fig. 6) must be transmitted in all blocks. Namely, $(4 + 4 + 8) \times 2700 = 43200$ bits/field is a fixed data amount. The bit numbers of Ai, Pi, DATAi are variable, and it is necessary to know these bit numbers. At the comparator 37, a comparison on the variable bit numbers is made.

Description will be given on the calculation of the data amount of address data Ai (four bits) of a sub-block i and data Pi (four bits) of a sample number of the sub-block i.

The case where Ai, Pi must be sent is the case where there is at least one AC coefficient having a value other than zero in each sub-block. Therefore, it is sufficient only to focus on the maximum value MAX of the AC coefficients of each sub-block. Now, the frequency distribution of the maximum value MAX of the absolute values of the AC coefficients in the sub-blocks 1 to 15 of all blocks in one field is developed, and this frequency distribution is converted into an accumulated frequency distribution.

The frequency distribution memory 8 is cleared before the write-in. The adder 22 generates zero data at the time of the clear operation. Also, sequentially changing addresses from the address generator 42 of the control signal generating circuit 11 are supplied via the multiplexer 21 to the memory 8, and zero data is written into all addresses of six bits. After the clear, the multiplexer 21 selects the maximum value MAX detected at the maximum value detector 7, and the multiplexer 23 selects an input of +1. Data at an address designated by the maximum value MAX is read out of the memory 8 and added to +1 at the adder 22. The output data of the adder 22 is written into the same address as input data of the memory 8. After this processing has been done over one field period, the frequency distribution of the maximum value MAX of the absolute values of the AC coefficients is stored in the frequency distribution memory 8.

Like the frequency distribution memory 8, the frequency distribution memory 9 is cleared to zero first, and the content of the memory 9 added by +1 at the adder 32 is written into the same address using the absolute value of the AC coefficient as its address so that a frequency distribution table corresponding to one field period of the absolute values of the AC coefficients is formed into the memory 9. If the distribution tables of occurrence frequency corresponding to one field are formed in the memories 8 and 9, accumulated frequency distribution tables are developed from these frequency distribution tables.

For forming an accumulated frequency distribution table, the multiplexers 21 and 31 are switched into a state for selecting the output of the address generator 42 of the control signal generating circuit 11, and the multiplexers 23 and 33 are switched into a state for selecting the respective outputs of the registers 24 and 34. The address generator 42 generates decrementing addresses as (127, 126, 125, ..., 2, 1). A read-out output of each address is added to the outputs of registers 24 and 34 at the adders 22 and 32, respectively. The registers 24 and 34 are reset at zero prior to forming an accumulated frequency distribution table. Therefore, a value obtained by accumulating the value from the address 127 is written into the memories 8 and 9. After the addresses of the memories 8 and 9 have changed from the address 127 to the address 1, an accumulated frequency distribution table is developed in each memory.

Fig. 10A is a frequency distribution graph where the maximum value MAX of the absolute values of AC coefficients is selected as a traverse axis, while the occurrence frequency is selected as a vertical axis. With the accumulation of the frequency distribution from the side of 127 toward 1, an accumulated frequency distribution graph shown in Fig. 10B is obtained. From this accumulated frequency distribution graph, when the weighting coefficients are multiplied by the AC coefficients, the number of the sub-blocks with the maximum value MAX of 0 and the number of the sub-blocks to be transmitted can be seen.

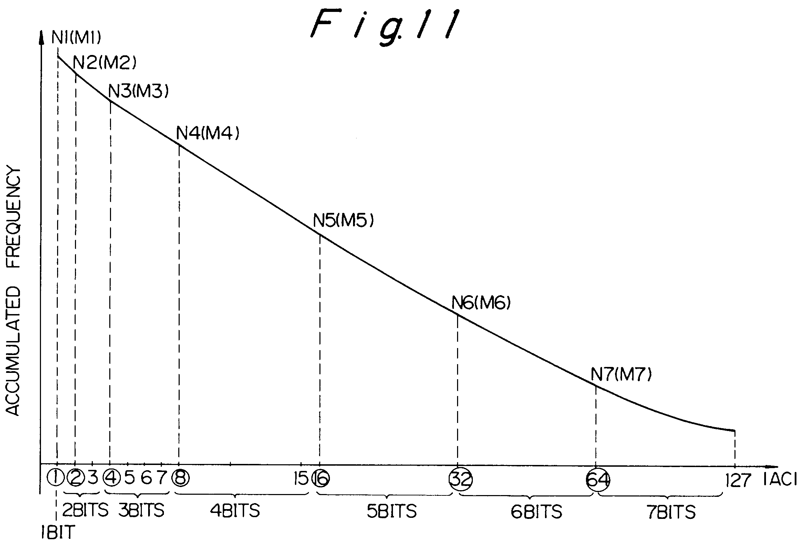

When the accumulated frequency distribution graph formed in the memory 8 is the one specifically shown in Fig. 11, the bit numbers of Ai, Pi to be transmitted can be obtained immediately as described below.

* In the case where coefficient data is directly used (mode 1),
  the number of sub-blocks for sending Ai, Pi: M1
  the transmission bit number: 8M1
* In the case where coefficient data is multiplied by 1/2 (mode 2),
  the number of sub-blocks for sending Ai, Pi: M2
  the transmission bit number: 8M2
* In the case of the multiplication of coefficient
  data by 1/4 (mode 3),
  the number of sub-blocks for sending Ai, Pi: M3
  the number of transmission bits: 8M3
* In the case of the multiplication of coefficient
  data by 1/8 (mode 4),
  the number of sub-blocks for sending Ai, Pi: M4
  the number of transmission bits: 8M4
* In the case of the multiplication of coefficient
  data by 1/16 (mode 5),
  the number of sub-blocks for sending Ai, Pi: M5
  the number of transmission bits: 8M5
* In the case of the multiplication of coefficient data by 1/32 (mode 6),
  the number of sub-blocks for sending Ai, Pi: M6
  the number of transmission bits: 8M6
* In the case of the multiplication of coefficient data by 1/64 (mode 7),
  the number of sub-blocks for sending Ai, Pi: M7
  the number of transmission bits: 8M7

Also, with respect to those multiplied by $(1/\sqrt{2})(1/\sqrt{2})^3(1\sqrt{2})^5$, etc., their sub-blocks can be seen from values of 3, 6, 12 in the horizontal axis of the accumulated frequency distribution table. Further, even when non-linear quantization is done, the number of the sub-blocks can be seen. In this way, the fact that the data amount of Ai, Pi to be transmitted can be detected when a weighting coefficient is multiplied by coefficient data (AC coefficient) means that the buffering for suppressing this data amount at an amount less than a predetermined amount is possible.

As mentioned before, after a cumulative frequency distribution table is formed in the frequency distribution memory 8, the multiplexer 21 is switched into a state for selecting an address from the address generator 42, and the multiplexer 23 is switched into a state for selecting 0. The address generator 42 generates addresses which sequentially change like (64, 32, 16, 8, 4, 2, 1). Since data from the memory 8 is not altered in the adder 22, data which have been read out by the above-mentioned address is nothing but the accumulated frequencies M7, M6, M5, M4, M3, M2, M1. These accumulated frequencies are multiplied by 8 at the multiplier 25, and the output of the multiplier 25 indicative of the number of sub-blocks for sending Ai, Pi is given to the adder 36.

In order to calculate the data amount of the data DATAi to be sent, the occurrence frequency of the absolute values of all AC coefficients is obtained as mentioned above to make an accumulated frequency distribution graph (table) similar to Fig. 11. Assuming that Fig. 11 is an accumulated frequency distribution graph of AC coefficients formed in the memory 9, the transmission bit number when the conversion of transmission data is made as shown in Fig. 7 for transmission, the transmission bit number is as follows. Here, the bit number is the bit number of the absolute value of the AC coefficient which is a traverse axis of the accumulated frequency distribution graph, and a refernce Ni is employed in place of Mi as a frequency value to distinguish from Ai, Pi.

* The sample number of seven-bit AC coefficient: N7

The number of transmission bits: 14N7 bits
* The sample number of six-bit AC coefficient: N6-N7
  The number of transmission bits: 12(N6-N7) bits
* The sample number of five-bit AC coefficient: N5-N6
  The number of transmission bits: 10(N5-N6) bits
* The sample number of four-bit AC coefficient: N4-N5
  The number of transmission bits: 8(N4-N5) bits
* The sample number of three-bit AC coefficient: N3-N4
  The number of transmission bits: 6(N3-N4) bits
* The sample number of two-bit AC coefficient: N2-N3
  The number of transmission bits: 4(N2-N3) bits
* The sample number of one-bit AC coefficient: N1-N2
  The number of transmission bits: 2(N1-N2) bits

Consequently, the total bit number of the transmission data amount when the weighting coefficient is 1 in the mode 1 is obtained as: 2(N1 + N2 + N3 + N4 + N5 + N6 + N7) bits. In the mode 2 where the absolute value of an AC coefficient is multiplied by 1/2, the bit number of the AC coefficient is reduced by one bit so that a two-bit AC coefficient becomes one-bit AC coefficient. As a result, the total bit number is: 12N7 + 10(N6 -N7) + 8(N5 - N6) + 6(N4 - N5) + 4(N3 - N4) + 2(N2 - N3) = 2(N2 + N3 + N4 + N5 + N6 + N7) bits.

In the mode 3 where the absolute value of an AC coefficient is multiplied by 1/4, the total bit number is given by: 2(N3 + N4 + N5 + N6 + N7) bits.

In the mode 4 where the absolute value of an AC coefficient is multiplied by 1/8, the total bit number is: 2(N4 + N5 + N6 + N7) bits.

In the mode 5 where the absolute value of an AC coefficient is multiplied by 1/16, the total bit number is given by: 2(N5 + N6 + N7) bits.

In the mode 6 where the absolute value of an AC coefficient is multiplied by 1/32, the total bit number is given by: 2(N6 + N7) bits.

In the mode 7 where the absolute value of an AC coefficient is multiplied by 1/64, the total bit number is given by: 2N7 bits.

In addition, even when the multiplication of $(1/\sqrt{2})(1/\sqrt{2})^3(1/\sqrt{2})^5$, etc., is performed or when non-linear requantization is done as in the case of Ai and Pi, the transmission bit number can be obtained similarly. In the case where a weighting coefficient is multiplied by coefficient data (AC coefficient), to know the data amount of DATAi means that the buffering is possible to suppress this data amount at an amount less than a predetermined amount.

As has been described before, after a cumulative frequency distribution table is formed in the frequency distribution memory 9, the number of transmission bits is detected. For this detection, the multiplexer 31 is switched into a state for selecting an address from the address generator 42, and the multiplexer 33 is switched into a state for selecting the output of the register 34. The address generator 42 generates addresses which sequentially change like (64, 32, 16, 8, 4, 2, 1), as mentioned above. Since data from the memory 8 and data of a previous address stored in the register 34 are added at the adder 22, the data which has been read out by the above-mentioned address is nothing but the accumulated frequencies distribution N7, (N7 + N6), (N7 + N6 + N5), (N7 + N6 + N5 + N4), (N7 + N6 + N5 + N4 + N3), (N7 + N6 + N5 + N4 + N3 + N2), (N7 + N6 + N5 + N4 + N3 + N2 + N1). These accumulated frequencies are multiplied by two at the multiplier 35, and the output of the multiplier 35 indicative of the number of transmission bits of the AC coefficients is given to the adder 36.

The number of the transmission bits (where the number of fixed bits is excluded) is compared with an object value in the comparator 37 to detect whether it is larger or smaller than the object value. It is judged at the mode generator 41 whether it is necessary to advance a mode for reducing the transmission bit number further based on the comparison output of the comparator 37. For example, to obtain the transmission bit number at the mode 2 in which the weighting coefficient of 1/2 is multiplied by an AC coefficient, addresses of (64, 32, 16, 8, 4, 2) are output from the address generator 42, and it is judged whether the transmission bit number calculated based on the addresses in a manner similar to that mentioned above is larger or smaller than the object value.

As has been mentioned before, the mode in which the transmission bit number becomes smaller than the object value is decided, and the AC coefficient delayed at the buffer memory 5 is multiplied by the weighting coefficient corresponding to the mode at the weighting circuit 10.

As is apparent from the foregoing explanation, the transmission bit number per field in each mode can be represented by the following equations:

* In the case of the mode 1 where coefficient data is directly employed,

$$16 \times 2700 + 8M1 + 2(N1 + N2 + N3 + N4 + N5 + N6 + N7) \text{ bits}$$

* In the case of the mode 2 where coefficient data is multiplied by 1/2,

$$16 \times 2700 + 8M2 + 2(N2 + N3 + N4 + N5 + N6 + N7) \text{ bits}$$

* In the case of the mode 3 where coefficient data is multiplied by 1/4,

$$16 \times 2700 + 8M3 + 2(N3 + N4 + N5 + N6 + N7) \text{ bits}$$

* In the case of the mode 4 where coefficient data is multiplied by 1/8,

$$16 \times 2700 + 8M4 + 2(N4 + N5 + N6 + N7) \text{ bits}$$

* In the case of the mode 5 where coefficient data is multiplied by 1/16,

$$16 \times 2700 + 8M5 + 2(N5 + N6 + N7) \text{ bits}$$

* In the case of the mode 6 where coefficient data is multiplied by 1/32,

$$16 \times 2700 + 8M6 + 2(N6 + N7) \text{ bits}$$

* In the case of the mode 7 where coefficient data is multiplied by 1/64,

$$16 \times 2700 + 8M7 + 2N7 \text{ bits}$$

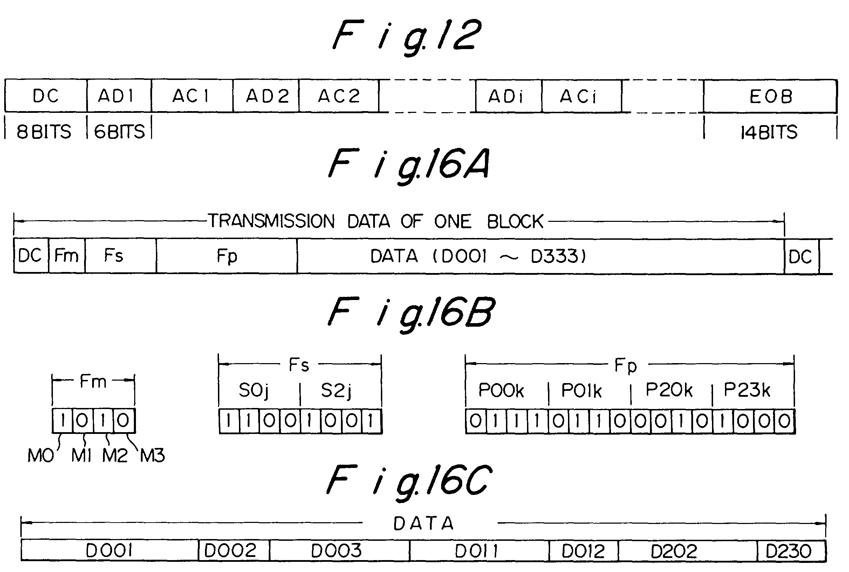

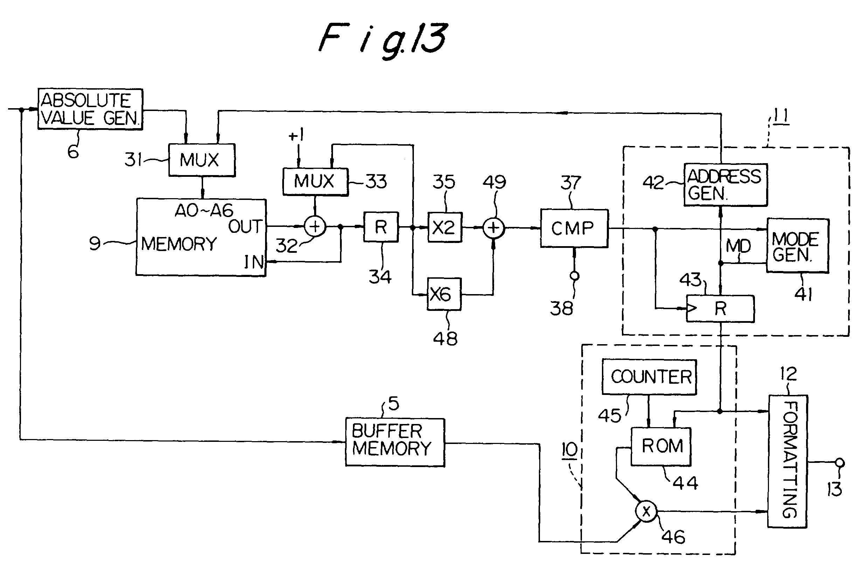

Figs. 12 and 13 shows another embodiment of the present invention. In this embodiment, a DC coefficient data and a plurality of significant AC coefficient data which are generated corresponding to the DCT block of (8 × 8) are transmitted. In other words, the DCT block is not divided into sub-blocks. This is a difference of this embodiment from the above mentioned embodiment.

Fig. 12 shows a structure of transmission data of this embodiment. The data of direct current component DC (8 bits) is positioned first. After the coefficient data DC, the address code ADi and the significant coefficient data ACi are positioned in pairs sequentially. Since sixty-four pieces of coefficient data are generated from each block, the addresses (0 to 63) (0: the address of the coefficient data DC) are allotted according to the predetermined order, for example, to the order of zigzag scanning. The coefficient data ACi are the transmission data which are obtained by the rule of conversion shown in Figs. 7A and 7B as mentioned before. The data EOB is added after the last coefficient data of AC component for indicating the end of the transmission data of one block.

The frequency distribution memory 8 which is provided in the above mentioned embodiment is not necessary, since the sub-block structure is not employed in this embodiment. In this result, a part of the related portion with the buffering process is constituted as shown in Fig. 13.

The absolute value of the AC coefficient is supplied to a multiplexer 31, and the output signal of the multiplexer 31 is given as a seven-bit address for the frequency distribution memory 9.

Data from frequency distribution memory 9 is supplied to an adder 32 and added to the output of a multiplexer 33 at the adder 32. Here, 0, +1 and the output signal of a register 34 are supplied to the multiplexer 33, and one of these input signals is selectively given to the adder 32. The output signal of the adder 32 is supplied to a register 34. As has been mentioned above, the output signal of the register 34 is feedback to the multiplexer 33. In addition, the output signal of the register 34 is multiplied by 2 through a multiplier 35 and multiplied by 6 through a multiplier 48. The output signal of the multiplier 35 and 48 are given to an adder 49. The output signal of the adder 49 is supplied to a comparator 37. The output signal of the multiplier 35 indicates the number of transmission bits of ACi coefficient data. The output signal of the multiplier 48 indicates the number of transmission bits of address code. Then the output signal of the adder 49 corresponds to the sum of these transmission bits.

An object value of the number of transmission bits is given to the comparator 37 from a terminal 38, and detection is made on whether the calculated transmission bit number is larger or smaller than the object value.

The comparison output signal of the comparator 37 is given to a mode generator 41 of the control signal generating circuit 11 indicated by a block of a broken line. The control signal generating circuit 11 has the address generator 42 and register 43 in the manner of the above described embodiment.

The mode control signal MD is supplied to the weighting circuit 10 from the register 43. The weighting circuit 10 is constituted by a ROM 44 and a multiplier 46. The ROM 44 is supplied, as an address, with the mode control signal MD from the register 43 and a sub-block number generated at a counter 45, and generates a weighting coefficient. At the multiplier 46 coefficient data from the buffer memory 5 and the weighting coefficient read out of the ROM 44 are multiplied.

To control the transmission bit number per field at a value smaller than an object value in the same way of the above embodiment, the transmission bit number is calculated in the mode 1 (i.e., when the weighting coefficient is 1), the transmission bit number and the object value are compared in the comparator 37, and when the transmission bit number is smaller than the object value, AC coefficient weighted in the mode 1 are transmitted. Conversely, when the transmission bit number is larger than the object value, the transmission bit number is calculated in the mode 2 (i.e., when the weighting coefficient is 1/2), and the transmission bit number is compared with the object value. Until the transmission bit number becomes smaller than the object value, the modes are switched from the mode 1 to the mode 7 sequentially.

With respect to the calculation of the transmission bit number, explanation will be given taking an example of 2700 blocks/field.

First, data of DC component and data EOB for indicating the end of block are always transmitted for every block. In this result, $(8 + 14) \times 2700 = 59400$ bits/field is a fixed data amount. The bit number of the address code ADi and AC coefficient are variable, and it is necessary to know these bit numbers. At the comparator 37, a comparison on the variable bit number is made.

In order to calculate the total data amount of the address code ADi (6 bits) and the data ACi of all AC component, the frequency distribution of the absolute values of the AC coefficients is developed, and this frequency distribution is converted into an accumulated frequency distribution.

Assuming that Fig. 11 is an accumulated frequency distribution graph of AC coefficients formed in the memory 9, the transmission bit number when the conversion of transmission data is made as shown in Fig. 7 for transmission, the transmission bit number is as follows. Here, the bit number is the bit number of the absolute value of the AC coefficient which is a traverse axis of the accumulated frequency distribution graph, and a refernce Ni is employed as a frequency value.

* The sample number of seven-bit AC coefficient: N7
  The number of transmission bits of the address code: 6N7
  The number of transmission bits: 14N7
* The sample number of six-bit AC coefficient: N6-N7
  The number of transmission bits of the address code: 6(N6-N7)
  The number of transmission bits: 12(N6-N7)
* The sample number of five-bit AC coefficient: N5-N6
  The number of transmission bits of the address code: 6(N5-N6)
  The number of transmission bits: 10(N5-N6)
* The sample number of four-bit AC coefficient: N4-N5
  The number of transmission bits of the address code: 6(N4-N5)
  The number of transmission bits: 8(N4-N5)
* The sample number of three-bit AC coefficient: N3-N4
  The number of transmission bits of the address code: 6(N3-N4)
  The number of transmission bits: 6(N3-N4)
* The sample number of two-bit AC coefficient: N2-N3
  The number of transmission bits of the address code: 6(N2-N3)
  The number of transmission bits: 4(N2-N3)
* The sample number of one-bit AC coefficient: N1-N2
  The number of transmission bits of the address code: 6(N1-N2)
  The number of transmission bits: 2(N1-N2)

Consequently, the total bit number of the transmission data amount when the weighting coefficient is 1 in the mode 1 is obtained as: $6N1 + 2(N1 + N2 + N3 + N4 + N5 + N6 + N7)$ bits. The total bit number in each of the mode 2 to the mode 7 in which the absolute value of the AC coefficient is multiplied by 1/2, 1/4, 1/8, 1/16, 1/32, 1/64 respectively is calculated as mentioned before.

The calculation of the number of transmission bits of AC coefficient in every mode can be performed based on the accumulated frequency distribution data stored in the memory 9 in a manner similar to one embodiment described before. The data corresponding to the number of transmission bits is taken out from the adder 49. The mode in which the number of transmission bits obtained as mentioned before becomes smaller than the object is decided, and the weighting corresponding to this mode is performed at the weighting circuit 10.

In the above-stated embodiment, data of one field is divided into picture blocks such as (8 × 8). However, data in a frame may be divided into blocks. Also, to improve the compression rate, a block may be formed of picture data of two frames. Figs. 11 and 12 show one example and another example for forming blocks based on two-frame picture data.

Additionally, in the format development circuit 12, processings such as error correction encoding and the addition of a synchronization pattern may be done. The transmission bit number increased with these processings is a fixed amount.

An input picture signal is not limited to a luminance signal of a television signal, a component color picture signal is applicable. The components may be processed simultaneously, and they may be processed separately.

For transform codes, not only cosine transform but also orthogonal transform, etc., may be employed.

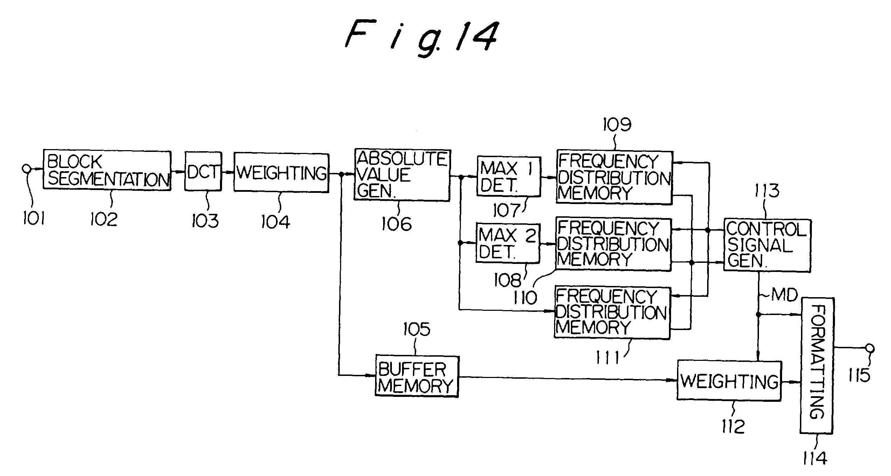

Now still another embodiment of the present invention will be described below referring to Fig. 14 and the rest.

Fig. 14 shows a block diagram of a whole system of the embodiment. In Fig. 14, a sampled discrete picture signal is supplied to an input terminal indicated by 101, and the input digital picture signal is given to a block segmentation circuit 102. In the block segmentation circuit 102, a digital signal in a field is converted from the scanning order to the block order. Since the structure of block is the same as mentioned referring to Fig. 3 in the first embodiment, the detail description of that is omitted for simplicity.

The output signal of the block segmentation circuit 102 is supplied to a cosine transform (DCT transform) circuit 103. At the cosine transform circuit 103, discrete cosine transform is made by a processing similar to the conventional one. A coefficient table of (8 × 8) corresponding to the block size is obtained from the cosine transform circuit 103. In this coefficient table, DC coefficient data is ten-bit data containing a sign (±) bit of one bit, and AC coefficient data is eight-bit data containing a sign (±) bit of one bit, for example.

The coefficient data from the cosine transform circuit 103 is supplied to a weighting circuit 104. The operation of the weighting circuit 104 is the same as the weighting circuit 4 shown in Fig. 2.

Coefficient data from the weighting circuit 104 is supplied to a buffer memory 105 composed of one field memory and an absolute value generating circuit 106. The coefficient data converted into an absolute value at the absolute value generating circuit 106 is supplied to a maximum value detector 107, a maximum value detector 108 and a frequency distribution memory 111. The output signal of the maximum value detector 107 is given to a frequency distribution memory 109. The output signal of the maximum value detector 108 is given to a frequency distribution memory 110. The maximum value detector 107 detects a maximum value MAX1 of absolute values of AC coefficients for every sub-block further divided from a block for DCT. This sub-block is called an M-block hereunder. The other maximum value detector 108 detects a maximum value MAX2 of absolute values of AC coefficients for every sub-block further divided from an M-block. The other sub-block is called an S-block hereunder.

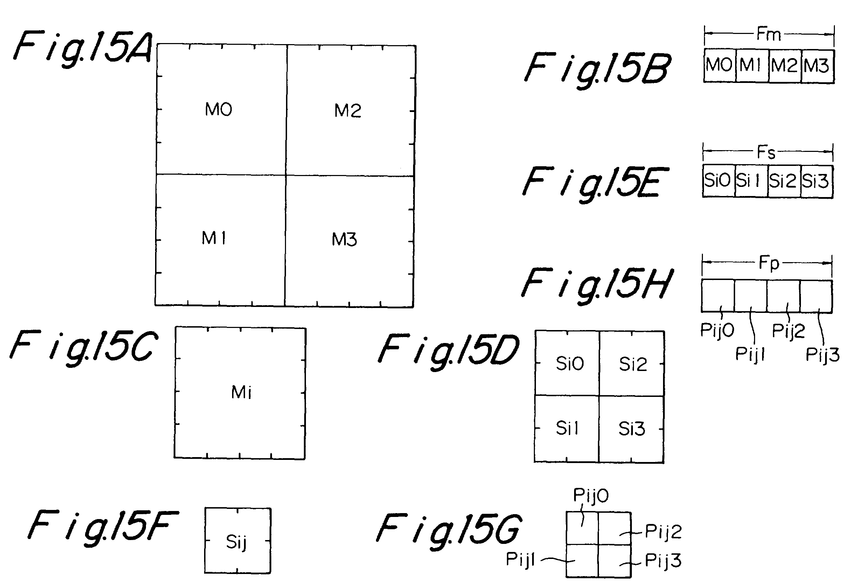

The above mentioned L-block of (8 × 8) is further divided into 4 M-blocks M0, M1, M2, M3, of (4 × 4) as shown in Fig. 15A. With respect to the M-blocks, Fm shown in Fig. 15B is defined as a flag. One M-block Mi (i = 0, 1, 2 or 3) shown in Fig. 15C is further divided into 4 S-blocks Si0, Si1, Si2, Si3 as shown in Fig. 15D. With respect to the S-blocks, Fs shown in Fig. 15E is defined as a flag. In one S-block Sij (ij = 00 to 03, 10 to 13, 20 to 23 or 30 to 33) shown in Fig. 15F, 4 samples Pij0, Pij1, Pij2 and Pij3 are contained as shown in Fig. 15G. A flag Fp is determined corresponding to each of the samples as shown in Fig. 15H. Each bit contained in the flag Fm, Fs, or Fp indicates whether there is a significant (i.e. not zero) AC coefficient data or not. That is, the logical 0 of one bit means that there is no significant data, and the logical 1 of one bit means existence of a significant data.

In the case where the L-block (or the M-block) is divided into the M-blocks (or the S-blocks), the vertical side and the horizontal side of the M-blocks (or the S-blocks) are equally divided as shown in Fig. 15. However, the method by which the larger block divided in order of zigzag scanning into the smaller blocks can be employed in place of the above-mentioned method.

The frequency distribution memories 109, 110 and 111 are provided for the buffering process which is described later. In the frequency distribution memory 109, the frequency distribution of the maximum value MAX1 in an M-block of AC coefficients which are converted into absolute values is stored, and the maximum value MAX1 is then accumulated in a period of one field to form an accumulated frequency distribution table. Additionally, in the frequency distribution memory 110, the frequency distribution of the maximum value MAX2 in an S-block of AC coefficients which are converted into absolute values is stored, and the maximum value MAX2 is then accumulated in a period of one field to form an accumulated frequency distribution table. Moreover, in the frequency distribution memory 111, the frequency distribution of the AC coefficients converted into the absolute values is stored, and this value is then accumulated in a period of one field to form an accumulated frequency distribution.

The buffer memory 105 has a memory capacity of one field which is the unit of the buffering process, and coefficient data from the buffer memory 105 is supplied to a weighting circuit 112. The weighting circuit 112 is provided for the buffering process, and a controlled-weighting coefficient is multiplied by the coefficient data so that the transmission data amount (transmission bit number) per field does not exceed a predetermined value for an object. The maximum value of the weighting coefficients is 1, and as they become small like 1/2, 1/4, 1/8, 1/16, 1/32, 1/64, the data amount to be transmitted decreases. The object to be subjected to the buffering process is AC components, and the DC component of high importance is transmitted in the form of original data.

Addresses for the frequency distribution memories 109, 110 and 111, a mode signal for designating a weighting coefficient for the weighting circuit 112, etc., are developed at a control signal generating circuit 113. Coefficient data and the mode signal from the weighting circuit 112 are supplied to a format development circuit 114, and transmission data is generated from an output terminal 115 of the format development circuit 114 to be sent to a transmission path. An example of the transmission path is a process for magnetic recording/reproduction. In the format development circuit 114, the addition of a synchronization pattern for transmission, processing for error correction encoding, etc., are made when necessary. The processing such as the calculation of the transmission bit number can be done in a data-dropping period of input data (vertical blanking period), and the weighting process is made for data read out of the buffer memory 105 in the next field period.

Fig. 16A shows a structure of transmission data, for example. The transmission data has a structure in which the data of direct current component DC (10 bits) is positioned first, and flags Fm, Fs, Fp are positioned in order after the data DC, furthermore the AC coefficient data are positioned after the flag Fp.

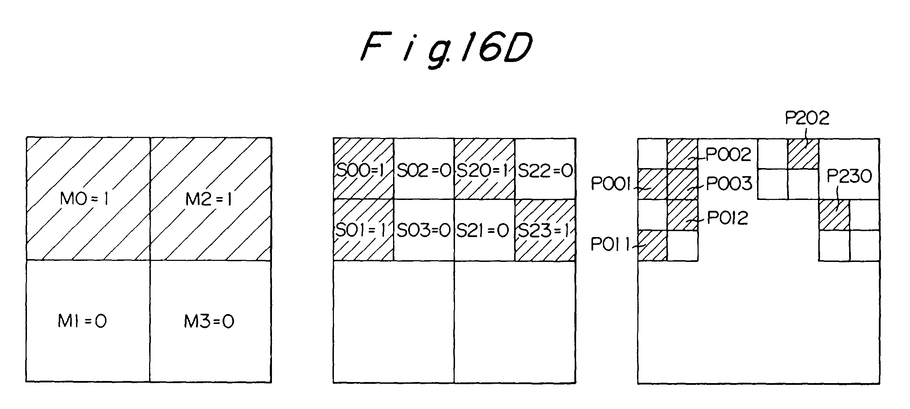

Now the structure of transmission data will be described in detail, when the significant data are indicated by hatched portion in Fig. 16D, for example. M0 and M2 include the significant data among the M-blocks. Therefore, the bit pattern of the flag Fm of four bits is set to (1010) as shown in Fig. 16B.

It is necessary to send the flag Fs of S-blocks S0j and S2j corresponding to two M-blocks M0 and M2. In this case, the flag Fs is eight-bits data, since S0j and S2j have eight S-blocks in total. Since the significant data are contained in the S-blocks S00, S01, S20 and S23 among these S-blocks, the flag Fs has the bit pattern (11001001) as shown in Fig. 16B. It is necessary to send the flag Fp of the samples P00k, P01k, P20k and P23k of $(4 \times 4 = 16)$, corresponding to these four S-blocks in which the significant data are contained. Since the samples P001, P002, P003, P011, P012, P202 and P230 are significant data, the bit pattern of the flag Fp is set to (0111011000101000) as shown in Fig. 16B.

The seven significant data in sixty-three AC coefficient data are identified by flags Fm, Fs and Fp as mentioned above. The value of these significant data are arranged in order after the flag Fp. D001 to D230 are transmission data into which the value of samples P001 to P230 are converted. Since the conversion of AC coefficient data is the same as that described referring to Fig. 7, the detailed description of that is omitted.

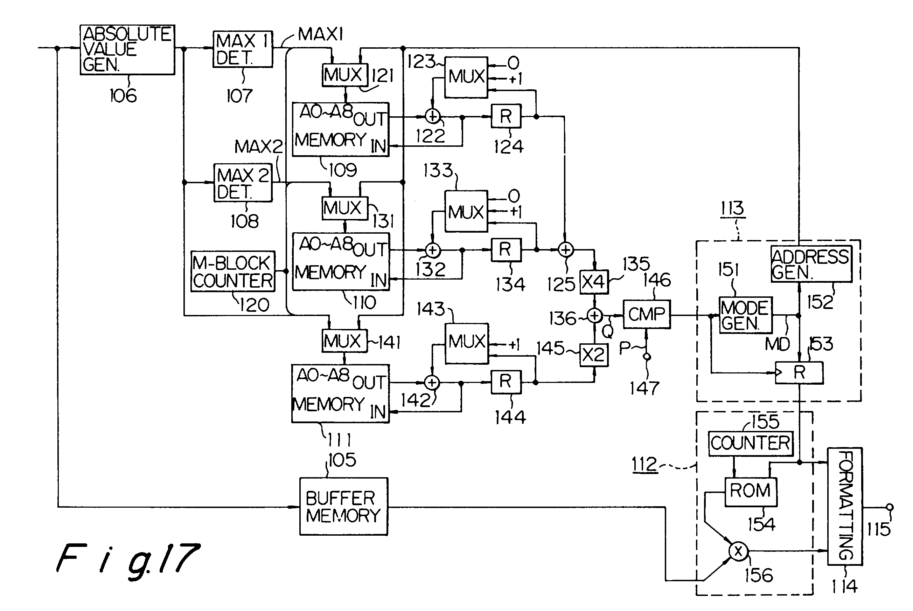

Fig. 17 shows a detailed part of the related portion with the buffering process of still another embodiment. An absolute value of an AC coefficient from the absolute value generating circuit 106 is supplied to the maximum value detector 107, and a maximum value MAX1 for each M-block is detected at the maximum value detector 107. The maximum value MAX1 is given to a multiplexer 121, and the output signal of the multiplexer 121 is supplied as a seven-bit address A0 to A6 for the frequency distribution memory 109. Also, a maximum value MAX2 for each S-block which is detected at the maximum value detector 108 is given to a multiplexer 131, and the output signal of the multiplexer 131 is supplied as a seven-bit address A0 to A6 for the frequency distribution memory 110. Further, the absolute value of the AC coefficient is supplied to a multiplexer 141, and the output signal of the multiplexer 141 is given as a seven-bit address A0 to A6 for the frequency distribution memory 111.

An M-block counter indicated by 120 is provided, and two bits developed by the counter 120 is supplied to the multiplexers 121, 131 and 141 as an upper address A7 and A8. The memory area of memory 109, 110, 111 are divided corresponding to the M-block by the upper address A7 and A8 respectively.

Data which is read from frequency distribution memory 109 is supplied to an adder 122 and added to the output of a multiplexer 123 at the adder 122. Here, 0, +1 and the output signal of a register 124 are supplied to the multiplexer 123, and one of these input signals is selectively given to the adder 122. The output signal of the adder 122 is supplied to a register 124. As has been mentioned above, the output signal of the register 124 is feedback to the multiplexer 123 and given to an adder 125.

Data which is read from frequency distribution memory 110 is supplied to an adder 132 and added to the output of a multiplexer 133 at the adder 132. Here, 0, +1 and the output signal of a register 134 are supplied to the multiplexer 133, and one of these input signals is selectively given to the adder 132. The output signal of the adder 132 is supplied to a register 134. As has been mentioned above, the output signal of the register 134 is feedback to the multiplexer 133 and given to the adder 125. The output signal of the adder 125 is multiplied by 4 through a multiplier 135, and the output signal of the multiplier 135 is given to an adder 136.

In association with the frequency distribution memory 111, an adder 142, a multiplexer 143, a register 144 and a multiplier (twofold circuit) 145 are provided like the memory 110. The multipliers 135 and 145 can be composed of a shift circuit.

As described later, the number of transmission bits Q of AC coefficients necessary for transmission is obtained at the output of an adder 136, and the number of transmission bits Q is supplied to a comparator 146. An object value P of the number of transmission bits is given to the comparator 146 from a terminal 147, and detection is made on whether the calculated transmission bit number Q is larger or smaller than the object value P. In the case of (P > Q), the comparison output signal becomes high level, for example.

The comparison output signal of the comparator 146 is given to a mode generator 151 of the control signal generating circuit 113 indicated in a block by a broken line. The mode generator 151 generates a three-bit mode control signal MD, for example. The mode control signal MD is supplied to an address generator 152 and a register 153. The mode signal generator 151 increases a mode number i from 0 step by step, and watches the comparison output signal at a stage of each mode number i. When the realation between the transmission bit number Q and the object value P is (P > Q), the mode number i is changed to (i + 1).

The renewal of the mode number i is stopped when the condition (P > Q) is not satisfied.

To the register 153, the comparison output signal from the comparator 146 is given as a clock. When the condition (P > Q) is not satisfied, the mode control signal MD is taken into the register 153. In addition, an address signal developed at the address generator 152 is supplied to the multiplexers 121, 131 and 141, respectively.

Mode i controlled by the mode control signal MD are as follows, and the number of transmission bits becomes larger according to the order of the mode number i:

mode 1:     AC coefficient multiplied by 1/64 is transmitted.
mode 2:     AC coefficient multiplied by 1/32 is transmitted.
mode 3:     AC coefficient multiplied by 1/16 is transmitted.
mode 4:     AC coefficient multiplied by 1/8 is transmitted.
mode 5:     AC coefficient multiplied by 1/4 is transmitted.
mode 6:     AC coefficient multiplied by 1/2 is transmitted.
mode 7:     AC coefficient is transmitted as it is.

Here the mode 0 means that the transmission path overflows with the data even if the transmission bits number is compressed as large as possible. However, under the normal condition, such an overflow does not occur.

The mode control signal MD from the register 153 is supplied to the weighting circuit 112 indicated by a block of a broken line. The weighting circuit 112 is constituted by a ROM 154 and a multiplier 156. The ROM 154 is supplied, as an address, with the mode control signal MD from the register 153 and an M-block number generated at a counter 155, and generates a weighting coefficient. The multiplier 156 for multiplying coefficient data from the buffer memory 105 and the weighting coefficient read out of the ROM 154. The output data of the multiplier 156 is given to the format development circuit 114 and converted into transmission data together with the mode control signal MD.

The supply of the M-block number from the counter 155 at the weighting circuit 112 is to make it possible to perform the multiplication of a finer weighting coefficient corresponding to the M-block rather than a constant weighting coefficient such as 1/2 by the AC coefficient.

With respect to the process to obtain the transmission bit number, explanation will be given hereinbelow. The number of L-blocks is indicated by NB (2700 blocks/field, for example).

First, flag Fm and DC in transmission data (refer to Fig. 16A) must be transmitted in all blocks independent of contents of a picture. Namely, (4 + 10) × NB = 14NB (37800 bits/field for example) is a fixed data amount. The bit numbers of the flags Fs and Fp, Ac coefficient data are variable, and it is necessary to know these bit numbers. At the comparator 146, a comparison of the data amount Q and the object value P on the variable bit numbers is made.

Description will be given on the calculation of the data amount of the flag Fs. The case where the flag Fs must be sent is the case where there is at least one AC coefficient having a value other than zero in each 16 samples contained in the M-block Mi. Therefore, it is sufficient only to focus on the maximum value MAX1 of the AC coefficients of each M-block. Now, the frequency distribution of the maximum value MAX1 of the absolute values of the AC coefficients in the M-blocks Mi of all blocks in one field is developed, and this frequency distribution is converted into an accumulated frequency distribution.

The frequency distribution memory 109 is cleared before the write-in. The adder 122 generates zero data at the time of the clear operation. Also, sequentially changing 9 bits address from the address generator 152 of the control signal generating circuit 113 is supplied via the multiplexer 121 to the memory 109, and zero data is written into all addresses (0, 1, 2, ..., 510, 511, for example).

After the clear, the multiplexer 121 selects the maximum value MAX1 detected at the maximum value detector 107, and the M-block address. The multiplexer 123 selects an input of +1. Data at an address designated by the maximum value MAX1 and the M-block number is read out of the memory 109 and added to +1 at the adder 122. The output data of the adder 122 is written into the same address as input data of the memory 109. This writing operation is performed at the rate of once per 16 samples. After this processing has been done over one field period, the frequency distribution of the maximum value MAX1 of the absolute values of the AC coefficients is stored in the frequency distribution memory 109 in respect of every M-block.

Also, like the frequency distribution memory 109, the frequency distribution memory 110 is cleared to zero first, and the content of the memory 110 added by +1 at the adder 132 is written into the same address using the maximum value MAX2 of the absolute value of the AC coefficient detected every S-block and M-block address as its address so that a frequency distribution table corresponding to one field period of the maximum value MAX2 is formed into the memory 110 in respect of every M-block. This writing operation is performed at the rate of once per 4 samples.

Further, like the frequency distribution memory 110, the frequency distribution memory 111 is cleared to zero first, and the content of the memory 111 added by +1 at the adder 142 is written into the same address using the M-block address and the absolute value of the AC coefficient as its address so that a frequency distribution table corresponding to one field period of the absolute value of the AC coefficients is formed into the memory 111.

If the distribution tables of occurrence frequency corresponding to one field are formed in the memories 109, 110 and 111, accumulated frequency distribution tables are developed from these frequency distribution tables. For forming an accumulated frequency distribution table, the multiplexers 121, 131 and 141 are switched into a state for selecting the output of the address generator 152 of the control signal generating circuit 113, and the multiplexers 123, 133 and 143 are switched into a state for selecting the respective outputs of the registers 124, 134 and 144. The address generator 152 generates the 9-bits address A0 to A8 as mentioned below.

In the duration for forming the accumulated frequency distribution table of the block M0, the upper address (A7, A8) is set to (00), and the 7-bits lower address A0 to A6 is generated decrementally such as (127, 126, 125, ... 2, 1, 0).

In the duration for forming the accumulated frequency distribution table of the block M1, the upper address (A7, A8) is set to (10), and the 7-bits lower address A0 to A6 is generated decrementally such as (127, 126, 125, ... 2, 1, 0).

In the duration for forming the accumulated frequency distribution table of the block M2, the upper address (A7, A8) is set to (01), and the 7-bits lower address A0 to LA6 is generated decrementally such as (127, 126, 125, ... 2, 1, 0).

In the duration for forming the accumulated frequency distribution table of the block M3, the upper address (A7, A8) is set to (11), and the 7-bits lower address A0 to A6 is generated decrementally such as (127, 126, 125, ... 2, 1, 0).

A read-out output of each address mentioned before is added to the outputs of registers 124, 134 and 144 at the adders 122, 132 and 142, respectively. The registers 124, 134 and 144 are reset at zero prior to forming an accumulated frequency distribution table. Therefore, a value from the address 127 is written into the memories 109, 110 and 111 as an accumulated value with respect to each M-block. After the addresses of the memories 109, 110 and 111 have changed from the address 127 to the address 1 every M-block, an accumulated frequency distribution table is developed in each memory.

The form of the accumulated frequency distribution table is similar to that shown in Fig. 11 on the whole. Also, since the manner for calculating the transmission bit number of each flag and the significant AC coefficients is very similar to the above-mentioned first embodiment, the detailed description of that manner is omitted.

Further, after accumulative frequency distribution table is formed in the frequency distribution memories 109, 110 and 111, the multiplexer 121, 131 and 141 are switched into a state for selecting the address from the address generator 152, and the multiplexer 123, 133 and 143 is switched into a state for selecting the output signal from the registers 124, 134 and 144, respectively.

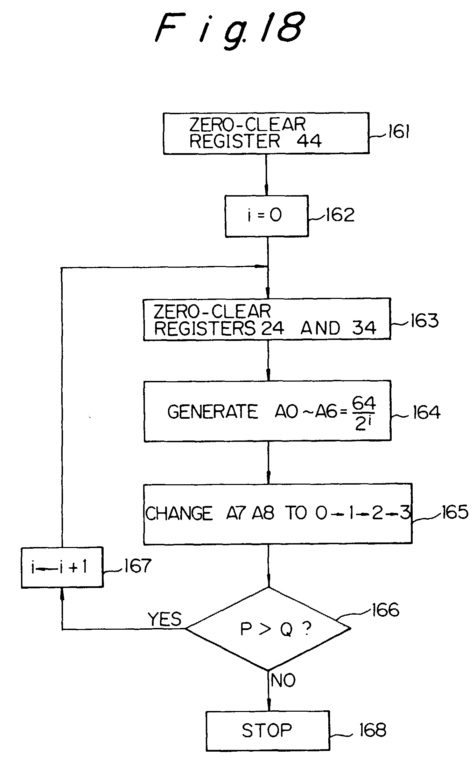

The address generator 152 generate the address according to a flowchart shown in Fig. 18. The register 144 is cleared to zero first (a step 161). Next, the mode number i is set to an initial value (0) (a step 162). Registers 124 and 134 are cleared to zero (a step 163). In a step 164 after the step 163, a value of $(64/2^i)$ (this value is 64 when i is 0) is generated as the lower address A0 to A6 (a step 164). The value of $(64/2^i)$ means a minimum transmission value ni. The upper address A7 and A8 varies from 0 to 1, from 1 to 2, from 2 to 3, successively (a step 165).

After the upper address A7 and A8 is advanced from 0 to 3, the output data of the adder 125 indicates the total number of bits of the flag Fs and Fp per one field as mentioned below. Here j denotes the number of the M-block.

$$\sum_{j=0}^{3} \{ S_j (ni) + P_j (ni)\}$$

The output data of the adder 125 is multiplied by 4 at the multiplier 134, and the output data of the multiplier 134 is supplied to the adder 136.

With respect to the register 144, the following output data is obtained, and the output data is mlutiplied by 2 at the multiplier 145. In the result, the total number of bits of AC coefficient data is calculated.

$$\sum_{k=0}^{i} \sum_{j=0}^{3} AC_j (ni)$$

The comparator 146 compares the amount of generated data Q with the object value P (a step 166). When the condition of (P > Q) is satisfied, the mode number i is changed to (i + 1) (a step 167), and then the prcocedure returns to the step 163. When the condition of (P > Q) is broken, the renewal of the mode number i is stopped (a step 168). The mode number is decided after the stop, and the mode number is adopted. The mode control signal MD identifies the adoped mode number.

As mentioned before, the mode in which the transmission bit number is smaller than the object value is decided, and the AC coefficient delayed by buffer memory 105 is multiplied by the weighting coefficient corresponding to the above mode.

As described above in detail, the present invention enables the control so that the data amount necessary for transmission is smaller than an object value by the feedforward control. For this reason, such a problem as oscillation does not occur differently from the feedback control. In addition, the invention allows the correct control of the data amount at the unit of one field or one frame and is suited for a digital VTR. Further, since the amount of the generated data is calculated for every M-block, this invention enables the amount of the generated data to be controlled finely.

Having described a specific preferred embodiment of the present invention with reference to the accompanying drawings, it is to be understood that the invention is not limited to that precise embodiment, and that various changes and modifications may be effected therein by one skilled in the art without departing from the scope of the invention as defined in the appended claim.

## Claims

1. A coding apparatus for coding digital video data in a block format allowing video data compression for transmission by data transmission means having a predetermined transmission capacity, comprising :

   block segmentation means (2) supplied with said digital video data and for generating block data,
   orthogonal transformation means (3) supplied with said block data and for generating coefficient data including a DC component and a plurality of AC components for each block,
   means for generating a first distribution table (6, 7, 8, 9, 21, 22, 31, 32) of the AC coefficient data during a predetermined period,
   means for generating a second distribution table (8, 9, 22-24, 32-34) of accumulating type from said first distribution table,
   means for controlling (8-11) the total number of transmission bits of said AC coefficient data during said predetermined period by said second distribution table and by said predetermined transmission capacity of said data transmission means,
   wherein said controlling means (8-11) also includes calculating means (25, 35, 36) for calculating a value representative of the total number of transmission bits of said AC coefficient data during said predetermined period on the basis of said second distribution table, and comparator means (37) for comparing said value with said predetermined transmission capacity (38) of said data transmission means, and
   wherein said controlling means (8-11) further includes means for generating (41) a mode control signal responsive to the output from the comparator means, and means (10) for outputting controlled AC coefficient data according to said mode control signal, said coding apparatus further comprising
   means for transmitting said DC coefficient data, said controlled AC coefficient data and an additional code for each said predetermined period, and characterised in that
   said first and second distribution tables store the frequency of occurrence and cumulative frequency of occurrence respectively of each of the absolute values of said AC coefficient data,
   said value representative of said total number of transmission bits is an exact calculation of said total number based on the total number of bits of the transmission data of each of the values of said AC coefficient data, and
   said means for outputting controlled AC coefficient data comprises a multiplier (46) for multiplying the AC coefficient data by a weighting coefficient.

**Patentansprüche**

1.  Codiervorrichtung zum Codieren digitaler Videodaten in ein Blockformat, das eine Videodatenkompression zur Übertragung durch eine Datenübertragungseinrichtung ermöglicht, die eine vorbestimmte Übertragungskapazität hat, mit:

    einer Blocksegmentierungseinrichtung (2), der die digitalen Videodaten zugeführt werden, zum Erzeugen von Blockdaten;
    einer Orthogonal-Transformationseinrichtung (3), der die Blockdaten zugeführt werden, zum Erzeugen von Koeffizientendaten, die eine DC-Komponente und mehrere AC-Komponenten für jeden Block einschließen;
    Einrichtungen zum Erzeugen einer ersten Verteilungstafel (6, 7, 8, 9, 21, 22, 31, 32) der AC-Koeffizientendaten während einer vorbestimmten Periode;
    Einrichtungen zum Erzeugen einer zweiten Verteilungstafel (8, 9, 22-24, 32-34) des akkumulierenden Typs aus der ersten Verteilungstafel;
    Einrichtungen zum Steuern (8-11) der Gesamtzahl von Übertragungsbits der AC-Koeffizientendaten während der vorbestimmten Periode durch die zweite Verteilungstafel und durch die vorbestimmte Übertragungskapazität der Datenübertragungseinrichtung,
    wobei die Steuereinrichtungen (8-11) weiterhin Berechnungseinrichtungen (25, 35, 36) zum Berechnen eines Wertes, der die Gesamtzahl der Übertragungsbits der AC-Koeffizientendaten während der vorbestimmten Periode repräsentiert, auf der Basis der zweiten Verteilungstafel, und eine Komparatoreinrichtung (37) zum Vergleichen des Wertes mit der vorbestimmten Übertragungskapazität (38) der Datenübertragungseinrichtung aufweisen; und
    wobei die Steuereinrichtungen (8-11) weiterhin eine Einrichtung zum Erzeugen (41) eines Zustands-Steuersignales, das von dem Ausgang der Komparatoreinrichtung abhängt, und eine Einrichtung (10) zum Ausgeben gesteuerter AC-Koeffizientendaten in Übereinstimmung mit dem Zustands-Steuersignal aufweisen,
    wobei die Codiervorrichtung weiterhin eine Einrichtung zum Übertragen der DC-Koeffizientendaten, der gesteuerten AC-Koeffizientendaten und eines zusätzlichen Codes für jede vorbestimmte Periode aufweist und dadurch gekennzeichnet ist, daß die erste und die zweite Verteilungstafel die Frequenz des Auftretens bzw. die kumulative Frequenz des Auftretens von jedem der absoluten Werte der AC-Koeffizientendaten speichern,
    wobei der die Gesamtzahl der Übertragungsbits repräsentierende Wert eine exakte Berechnung der Gesamtzahl auf der Basis der Gesamtzahl von Bits der Übertragungsdaten von jedem der Werte der AC-Koeffizientendaten darstellt; und
    wobei die Einrichtung zum Ausgeben von gesteuerten AC-Koeffizientendaten eine Multiplikationsvorrichtung (46) zum Multiplizieren der AC-Koeffizientendaten mit einem Gewichtungskoeffizient umfaßt.

**Revendications**

1.  Dispositif de codage pour coder des données vidéo numériques en un format à blocs permettant la compression des données vidéo pour transmission par un moyen de transmission de données ayant une capacité de transmission prédéterminée, comprenant :

    un moyen de segmentation en blocs (2) alimenté avec ladite donnée vidéo numérique et pour produire des blocs de données ;
    un moyen de transformation orthogonal (3) alimenté avec lesdits blocs de données et pour produire une donnée de coefficient incluant une composante de courant continu et plusieurs composantes de courant alternatif pour chaque bloc ;
    un moyen générateur (6, 7, 8, 9, 21, 22, 31, 32) pour produire une première table de répartition des données de coefficient de courant alternatif pendant une période prédéterminée ;
    un moyen générateur (8, 9, 22 à 24, 32 à 34) pour produire, à partir de ladite première table de répartition, une seconde table de répartition du type à accumulation ;
    un moyen de commande (8 à 11) pour commander, par ladite seconde table de répartition et par ladite capacité de transmission prédéterminée dudit moyen de transmission de données, le nombre total de binaires à transmettre desdites données de coefficient de courant alternatif, pendant ladite période prédéterminée ;
    dans lequel ledit moyen de commande (8 à 11) comprend également un moyen de calcul (25, 35, 36) pour calculer une valeur représentant le nombre total de binaires à transmettre desdites données de coefficient de courant alternatif pendant ladite période prédéterminée, sur la base de ladite seconde table de répartition, et un moyen comparateur (37) pour comparer ladite valeur avec ladite capacité de transmission prédéterminée (38) dudit moyen de transmission de données ; et

dans lequel ledit moyen de commande (8 à 11) comprend, en outre, un moyen générateur (41) pour produire un signal de commande de mode sensible à la sortie du moyen comparateur, et un moyen de sortie (10) pour sortir les données de coefficient de courant alternatif commandées, en fonction dudit signal de commande de mode, ledit dispositif de codage comprenant, en outre :

un moyen de transmission pour transmettre ladite donnée de coefficient de courant continu, lesdites données de coefficient de courant alternatif commandées et un code supplémentaire pour chaque dite période prédéterminée, et caractérisé :

en ce que lesdites première et seconde tables de répartition mémorisent la fréquence d'occurrence et la fréquence cumulée de l'occurrence, respectivement, de chacune des valeurs absolues desdites données de coefficient de courant alternatif;

en ce que ladite valeur représentative dudit nombre total de binaires à transmettre est un calcul exact dudit nombre total basé sur le nombre total de binaires de données à transmettre de chacune des valeurs desdites données de coefficient de courant alternatif ; et

en ce que ledit moyen pour sortir les données de coefficient de courant alternatif commandées comprend un multiplieur (46) pour multiplier la donnée de coefficient de courant alternatif par un coefficient de pondération.

EP 0 385 654 B1

# F i g. 1

```
          58 ⌐ BUFFER
                CONTROL

  ○──►  DCT ──► BLOCK      ──► REQUAN-  ──► SORTING ──► VARIABLE ──► BUFFER ──► ○
              SCANNING        TIZATION                 -LENGTH      MEMORY
                                                        ENC
  51    52       53            54          55            56          57      59
```

# Fig. 2

# F i g.3

8 LINES

8 PIXELS

# F i g.4

0.5    0.5

0.25

## F i g.5A

8 PIXELS

8 LINES

## F i g.5B

| 0 | 1 | 5 | 6 |
|---|---|---|---|
| 2 | 4 | 7 | 12 |
| 3 | 8 | 11 | 13 |
| 9 | 10 | 14 | 15 |

## F i g.5C

| 0 | 1 |
|---|---|
| 2 | 3 |

## F i g.6

P0   P1   P3   P4   P10

| | DC | DATA 0 | | DATA 1 | | DATA 3 | | DATA 4 | | DATA 10 |

A0   A1   A3   A4   A10

| 0 | 1 | 0 | 1 |

## F i g. 7A

| VALUE OF AC COMPONENT | NUMBER OF BITS | COEFFICIENT DATA |
|---|---|---|
| $\pm$ 1 | 1 | $\pm$ a0 |
| $\pm$ 2,3 | 2 | $\pm$ a1 a0 |
| $\pm$ 4 ~ $\pm$ 7 | 3 | $\pm$ a2 a1 a0 |
| $\pm$ 8 ~ $\pm$ 15 | 4 | $\pm$ a3 a2 a1 a0 |
| $\pm$ 16 ~ $\pm$ 31 | 5 | $\pm$ a4 a3 a2 a1 a0 |
| $\pm$ 32 ~ $\pm$ 63 | 6 | $\pm$ a5 a4 a3 a2 a1 a0 |
| $\pm$ 64 ~ $\pm$ 127 | 7 | $\pm$ a6 a5 a4 a3 a2 a1 a0 |

## F i g. 7B

| TRANSMISSION DATA | NUMBER OF BITS |
|---|---|
| "1" S | 2 |
| "0" S "1" a0 | 4 |
| "0" S "0" a1 "1" a0 | 6 |
| "0" S "0" a2 "0" a1 "1" a0 | 8 |
| "0" S "0" a3 "0" a2 "0" a1 "1" a0 | 10 |
| "0" S "0" a4 "0" a3 "0" a2 "0" a1 "1" a0 | 12 |
| "0" S "0" a5 "0" a4 "0" a3 "0" a2 "0" a1 "1" a0 | 14 |

*Fig. 8*

EP 0 385 654 B1

# Fig.9

COUNTER 45

MD

47

NON-LINEAR QUANTIZATION

# Fig.10A

OCCURRENCE FREQUENCY

1                127 IACI

# Fig.10B

ACCUMULATED FREQUENCY

1                127 IACI

EP 0 385 654 B1

# Fig.11

## F i g.12

| DC | AD1 | AC1 | AD2 | AC2 | | ADi | ACi | | EOB |
|----|-----|-----|-----|-----|--|-----|-----|--|-----|

| 8BITS | 6BITS | | | | | | | | 14BITS |

## F i g.16A

TRANSMISSION DATA OF ONE BLOCK

| DC | Fm | Fs | Fp | DATA (DOO1 ~ D333) | DC |
|----|----|----|----|--------------------|----|

## F i g.16B

Fm

| I | O | I | O |
|---|---|---|---|

MO  M1  M2  M3

Fs

| SOj | | S2j | |
|-----|--|-----|--|

| I | I | O | O | I | O | O | I |
|---|---|---|---|---|---|---|---|

Fp

| POOk | | POIk | | P20k | | P23k | |
|------|--|------|--|------|--|------|--|

| O | I | I | I | O | I | I | O | O | O | I | O | I | O | O | O |
|---|---|---|---|---|---|---|---|---|---|---|---|---|---|---|---|

## F i g.16C

DATA

| DOO1 | DOO2 | DOO3 | DO11 | DO12 | D202 | D230 |
|------|------|------|------|------|------|------|

EP 0 385 654 B1

# Fig 13

ABSORLUTE VALUE GEN. 6

MUX 31

MEMORY 9 A0~A6 OUT IN

MUX 33 +1

+ 32

R 34

X2 35

X6 48

+ 49

CMP 37 38

MODE GEN. 41

ADDRESS GEN. 42

MD

R 43

11

COUNTER 45

ROM 44

X 46

FORMATTING 12 13

BUFFER MEMORY 5

10

# Fig. 14

EP 0 385 654 B1

*Fig.15A*

| MO | M2 |
|----|----|
| M1 | M3 |

*Fig.15B*

Fm

| MO | M1 | M2 | M3 |

*Fig.15E*

Fs

| SiO | Si 1 | Si2 | Si3 |

*Fig.15C*

Mi

*Fig.15H*

Fp

PijO  Pij1  Pij2  Pij3

*Fig.15D*

| SiO | Si2 |
|-----|-----|
| Si1 | Si3 |

*Fig.15F*

Sij

*Fig.15G*

PijO
Pij1  Pij2  Pij3

# F i g.16D

|  |  |
|---|---|
| MO = 1 | M2 = 1 |
| MI = O | M3 = O |

|  |  |  |  |
|---|---|---|---|
| S00=1 | S02=0 | S20=1 | S22=0 |
| S01=1 | S03=0 | S21=0 | S23=1 |

P001

P011

P002

P003

P012

P202

P230

Fig. 17

# F i g. 18

```
        ┌─────────────────┐
        │  ZERO-CLEAR     │──161
        │  REGISTER  44   │
        └─────────────────┘
                 │
             ┌───────┐
             │ i = 0 │──162
             └───────┘
                 │
        ┌──────────────────────┐
        │  ZERO-CLEAR          │──163
        │  REGISTERS 24 AND 34 │
        └──────────────────────┘
                 │
        ┌──────────────────────┐
        │  GENERATE  AO~A6=64/2ⁱ│──164
        └──────────────────────┘
                 │
        ┌──────────────────────────┐
        │CHANGE A7 A8 TO 0→1→2→3    │──165
        └──────────────────────────┘
                 │
   ┌─────────┐
   │ i←i+1   │──167
   └─────────┘
```

$$\text{GENERATE} \quad AO \sim A6 = \frac{64}{2^i}$$

CHANGE  A7 A8  TO  0→1→2→3

i ← i + 1

YES    P > Q ? ──166

NO

STOP ── 168